# FASCICULE DE BREVET EUROPEEN

(11) **EP 0 525 269 B1**
(45) Date de publication et mention de la délivrance du brevet: **09.11.1994**
(21) Numéro de dépôt: 91420215.5
(22) Date de dépôt: 28.06.1991
(51) Int. Cl.: F16L 41/12

(54) **Dispositif de piquage pour le raccordement d'un écoulement individuel sur un réseau principal formé par un tube annelé à double paroi**
Abzweigeinrichtung zum Verbinden eines unabhängigen Abflusses mit einem Hauptnetz, hergestellt durch ein gewelltes Doppelwandrohr
Connection device for a flow branch to a main flow net formed by a corrugated double walled pipe

(43) Date de publication de la demande: 03.02.1993
(73) Titulaire: RYB S.A., F-38590 Saint-Etienne-de-Saint-Geoirs (FR)
(72) Inventeur: Bommer, Raymond, F-38590 La Forteresse (FR)
(74) Mandataire: Monnier, Guy

(56) Documents cités:
- EP-A- 0 322 508
- GB-A- 1 362 969
- GB-A- 2 089 919
- US-A- 4 078 833

## Description

La présente invention a trait au raccordement des écoulements individuels d'eaux usées sur les réseaux collecteurs principaux d'évacuation à l'état enterré.

Si l'on a proposé des solutions satisfaisantes pour les réseaux collecteurs formés par des conduits à paroi extérieure lisse, la situation est plus complexe lorsqu'on a affaire à des canalisations constituées par des tuyaux en matière synthétique du type annelé à double paroi, du fait que le profil extérieur ondulé de ces tuyauteries se prête mal à des raccordements étanches.

C'est à ce problème particulier que la présente invention entend apporter une solution convenable.

A cet effet, l'invention a pour objet un dispositif de piquage caractérisé en ce qu'il comprend en combinaison :
- un corps principal à profil semi-cylindrique qui est équipé de moyens propres à permettre sa fixation sur le réseau collecteur principal et qui est pourvu d'une tubulure orientée de manière substantiellement radiale, se prolongeant intérieurement dans une ouverture pratiquée dans ledit réseau ;
- un élément souple d'appui qui est découpé d'une ouverture correspondant substantiellement à celle du réseau et qui présente une face extérieure lisse et une face intérieure ondulée conjuguée à celle du réseau ;
- et un joint rigide comportant une bride cylindrique engagée dans l'ouverture du réseau et une collerette annulaire apte à prendre appui contre la face extérieure lisse de l'élément sus-mentionné.

On obtient de la sorte un branchement qui est de mise en oeuvre particulièrement aisée, tout en comportant une étanchéité parfaite en dépit du profil extérieur ondulé du tube qui forme le réseau principal.

Le dessin annexé, donné à titre d'exemple, permettra de mieux comprendre l'invention, les caractéristiques qu'elle présente et les avantages qu'elle est susceptible de procurer :
Fig. 1 est une vue de côté d'un dispositif de piquage suivant l'invention, supposé monté sur un tube à profil annelé constituant réseau collecteur principal.
Fig. 2 montre les éléments qui constituent le dispositif suivant fig. 1, préalablement à leur assemblage et à leur montage sur le tube principal.

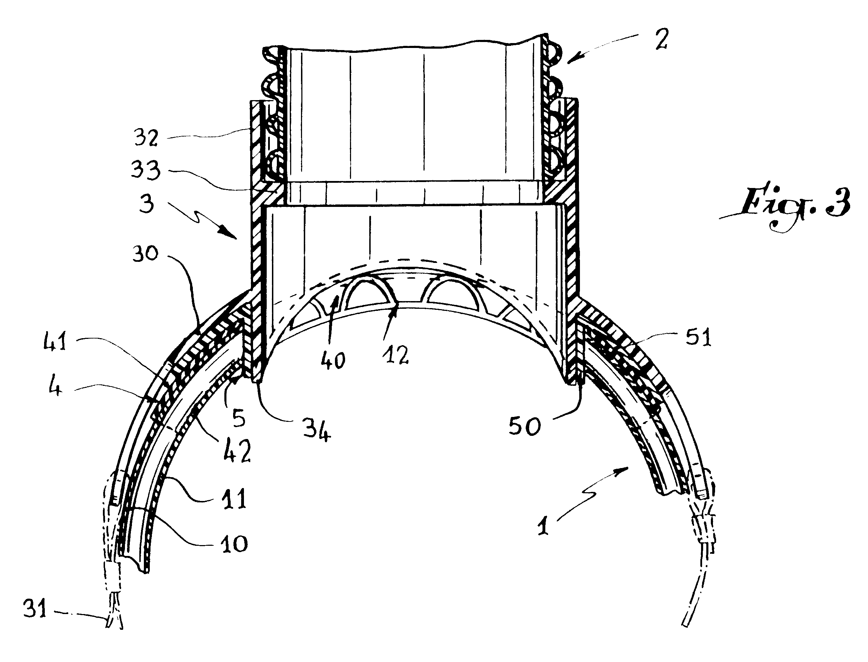

Fig. 3 est une coupe transversale représentant à plus grande échelle le dispositif à l'état monté.

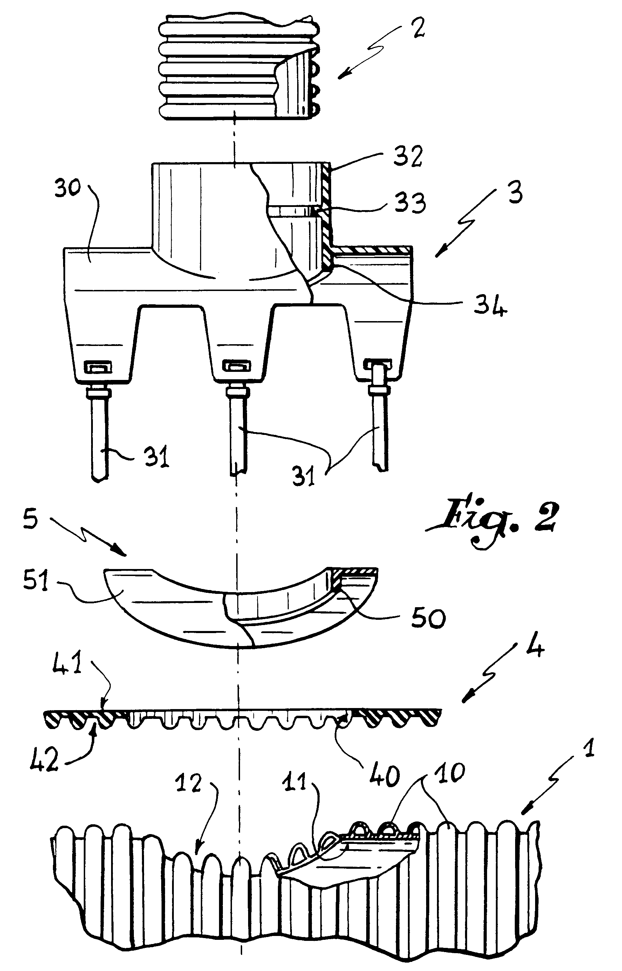

Sur ce dessin, la référence 1 désigne le tube qui forme le réseau collecteur principal, lequel tube comprend une paroi extérieure 10 à profil annelé, renforcée par une paroi intérieure lisse 11. Ce tube ou réseau 1 est découpé d'une ouverture à section circulaire qui a été référencée 12 en fig. 2 et qui est destinée au raccordement d'une canalisation individuelle d'écoulement indiquée en 2, elle-même du type annelé.

Le dispositif de piquage suivant l'invention comprend en premier lieu un corps 3 qui présente une partie 30 à profil semi-cylindrique établie au diamètre extérieur du tube 1 et qui est avantageusement réalisé en une matière synthétique moulée rigide ou semi-rigide. La partie 30 est équipée de sangles 31 agencées pour permettre sa fixation amovible par serrage sur le tube ou réseau 1 et elle est solidaire radialement d'une tubulure 32. Cette dernière comporte intérieurement une butée annulaire 33 qui est établie au diamètre de la canalisation 2 afin de former butée pour l'extrémité de celle-ci en en limitant ainsi l'enfoncement axial. On notera en outre que cette tubulure 32 se prolonge au-delà de la paroi de la partie 30 sous la forme d'un embout 34 propre à être introduit dans l'ouverture 12 du réseau principal 1.

Le dispositif comprend un outre un élément d'appui 4 qui est découpé d'une ouverture 40 à profil circulaire de diamètre au moins égal à celui de l'ouverture 12 et qui présente une face extérieure lisse 41 et une face intérieure 42 à profil ondulé. A cet élément souple 4 est associé un joint rigide 5 qui comporte une bride cylindrique 50 apte à être introduite à jeu réduit dans l'ouverture 12, et une collerette annulaire 51.

On conçoit qu'après avoir découpé, par exemple à l'aide d'une sciecloche ou outil analogue, l'ouverture 12 dans le tube 1 au point prévu pour le branchement de la canalisation 2, l'opérateur peut procéder à la pose du dispositif suivant l'invention en assujettissant le corps 3 sur le tube 1 moyennant introduction de l'embout 34 dans ladite ouverture 12. Préalablement à cette pose, il a disposé l'élément d'appui 4 sur le tube 1 en faisant coïncider axialement les ouvertures 40 et 12 et en prenant soin que le profit ondulé 42 soit tourné vers l'intérieur pour se conjuguer avec la paroi 10, l'ensemble étant complété par le joint 5 dont la colerette 50 est introduite dans l'ouverture 40.

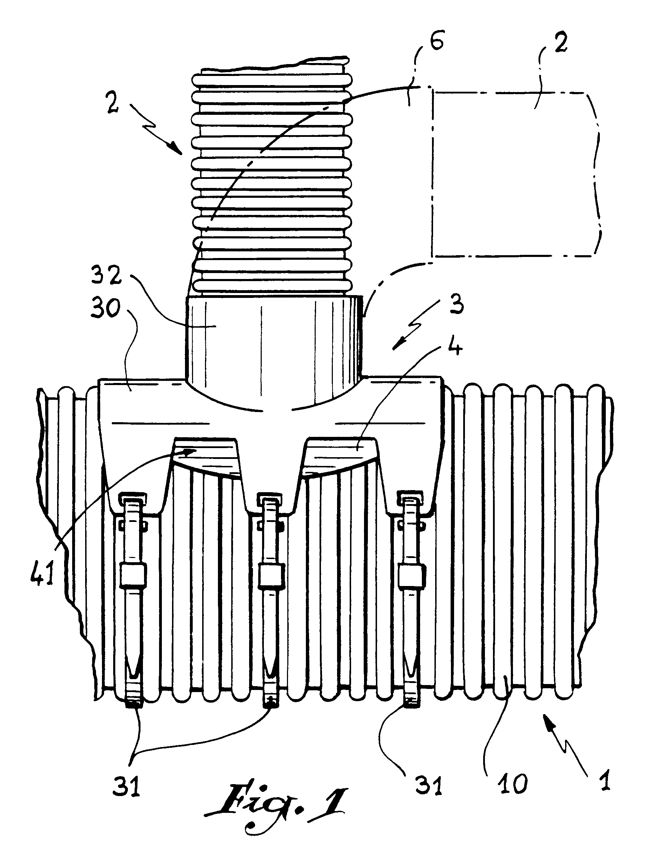

Après serrage des sangles 31, le dispositif est apte à recevoir par emmanchement l'extrémité libre de la canalisation 2, éventuellement avec interposition d'un coude tel que celui représenté en 6 en fig. 1. Une fois les sangles 31 serrés, le dispositif se trouve parfaitement fixé sur le réseau ou tube 1, sans autre opération et sans risque de fuite en dépit du profit ondulé dudit tube.

Il convient d'observer que l'ouverture 40 pratiquée dans l'élément d'appui 4 peut sans inconvénient présenter un diamètre légèrement supérieur à celui de l'ouverture 12 du tube ou réseau 1 du fait que le centrage du joint rigide 5 est toujours assuré par ladite ouverture 12, quelle que soit la position de cette dernière par rapport aux ondulations extérieures.

## Revendications

1. Dispositif de piquage pour le raccordement d'un écoutement individuel sur un réseau col lecteur principal formé par un tube annelé à double paroi, caractérisé en ce qu'il comprend en combinaison :
- un corps principal (3) à profit semi-cylindrique qui est équipé de moyens (31) pour sa fixation sur le réseau collecteur (1) et qui est pourvu d'une tubulure (32) orientée de manière substantiellement radiale, se prolongeant (en 34) intérieurement dans une ouverture (12) pratiquée dans ledit réseau,
- un élément souple d'appui (4) qui est découpé d'une ouverture (40) correspondant substantiellement à celle (12) du réseau (1) et qui présente une face extérieure lisse (41) et une face intérieure ondulée (42) conjuguée à celle (10) du réseau,
- et un joint rigide (5) comportant une bride cylindrique (50) engagée dans l'ouverture (12) du réseau (1) et une collerette annulaire (51) apte à prendre appui contre la face extérieure lisse (41) de l'élément (4) précité.

2. Dispositif suivant la revendication 1, caractérisé en ce que la tubulure (32) est pourvue d'une butée annulaire (33) limitant l'enfoncement axial de la canalisation individuelle d'écoulement (2).

3. Dispositif suivant l'une quelconque des revendications 1 et 2, caractérisé en ce que les moyens pour la fixation du corps (3) sur le réseau (1) sont constitués par des sangles (31).

## Claims

1. Penetrating apparatus for union of an individual branch on to main connector pipework formed with a double-walled annular tube, characterised in that it comprises in combination:
a main body (3) with semi-cylindrical profile which is provided with means (31) for fixing it on the main pipework (1) and which is provided with a neck (32) oriented in a substantially radial manner extending (34) internally into an opening (12) provided in the said pipework;
a flexible support (4) which is perforated with an opening (40) corresponding substantially to that (12) of the pipework (1) and which has an exterior smooth face (41) and an interior ribbed face (42) connecting to that (10) of the pipework;
and a rigid joint (5) comprising a cylindrical flange (50) engaged in the opening (12) of the pipework (1) and an annular collar (51) arranged to receive support against the smooth exterior face (41) of the previously mentioned element (4).

2. Apparatus according to claim 1, characterised in that the neck (32) is provided with an annular shoulder (33) limiting the axial insertion of the individual discharge piping (2).

3. Apparatus according to either of claims 1 and 2, characterised in that the means for fixing the body (3) to the pipework (1) are constituted by straps (31).

## Patentansprüche

1. Abzweigvorrichtung für die Verbindung eines individuellen Ablaufs in einem Hauptsammelnetz, gebildet durch ein doppelwandiges geriffeltes Rohr,
**dadurch gekennzeichnet,**
daß sie in Kombination umfaßt:
- einen Hauptkörper (3) mit halbzylindrischem Profil, der mit Mitteln (31) für seine Befestigung auf dem Sammelnetz (1) ausgestattet und mit einem im wesentlichen radial ausgerichteten Rohransatz versehen ist, der sich nach innen (bei 34) in eine in dem Netz ausgebildeten Öffnung (12) verlängert,
- ein weiches Stützelement (4), aus dem eine Öffnung (40) herausgeschnitten ist, die im wesentlichen der (12) des Netzes (1) entspricht und das eine äußere glatte Fläche (41) und eine gewellte Innenfläche aufweist, wobei letztere der (10) des Netzes zugeordnet ist,
- ein starres Dichtungselement (5), das einen zylindrischen in die Öffnung (12) des Netzes (1) eingreifenden Bundring (50) und einen ringförmigen Kragen (51) umfaßt, der sich gegen die glatte Außenfläche des zuvor erwähnten Elementes (4) abstützen kann.

2. Abzweigvorrichtung nach Anspruch 1, dadurch gekennzeichnet, daß der Rohransatz (32) mit einem ringförmigen Anschlag (33) versehen ist, der das axiale Eintauchen der individuellen Abflußleitung (2) begrenzt.

3. Abzweigvorrichtung nach Anspruch 1 oder 2, dadurch gekennzeichnet, daß die Mittel zur Befeatigung des Körpers auf dem Netz (1) durch Gurtbänder (31) gebildet werden.
